# EUROPÄISCHE PATENTSCHRIFT

(11) **EP 0 496 253 B1**
(45) Veröffentlichungstag und Bekanntmachung des Hinweises auf die Patenterteilung: **02.08.1995**
(21) Anmeldenummer: 92100513.8
(22) Anmeldetag: 14.01.1992
(51) Int. Cl.: H02G 15/105, H02G 15/103, H01B 9/02

(54) **Verfahren zum zyklischen Auskreuzen von Kabelmänteln**
Process for cyclical crossbonding of cable sheaths
Procédé de croisement cyclique de gaines de câbles

(30) Priorität: 25.01.1991 DE 4102114
(43) Veröffentlichungstag der Anmeldung: 29.07.1992
(73) Patentinhaber: KABEL RHEYDT Aktiengesellschaft, D-41179 Mönchengladbach (DE)
(72) Erfinder: Volker, Aue, W-4600 Dortmund 1 (DE)

(56) Entgegenhaltungen:
- GB-A- 898 762
- US-A- 4 464 583
- CIGRE INTERNATIONAL CONFERENCE ON LARGE HIGH VOLTAGE ELECTRIC SYSTEMS 28. August 1988, PARIS FR Seiten 1 - 5 P.P. LEUFKENS ET AL. 'Cross bonding and a special interruption joint for HV XLPE cable in relation with the use of metal oxide surge arresters'
- REVUE GENERALE DE L'ELECTRICITE Bd. 85, Nr. 4, April 1976, PARIS FR Seiten 323 - 330 D. PAULIN ET AL. 'Aspects particuliers d'une liaison en câbles haute tension'
- CIGRE INTERNATIONAL CONFERENCE ON LARGE HIGH VOLTAGE ELECTRIC SYSTEMS 28. August 1988, PARIS FR Seiten 1 - 4 C. TARALLI ET AL. 'High voltage EPR insulation cable system - Manufacturing and installation relevant characteristics'

## Beschreibung

Die Erfindung betrifft ein Verfahren zum zyklischen Auskreuzen von Kabelmänteln nach dem Oberbegriff des Anspruchs 1.

Bei langen Kabelverbindungen hat sich einerseits zur Reduzierung der Mantelverluste und andererseits zur Ermöglichung einer beidseitigen Erdung der elektrisch leitenden Kabelmäntel das zyklische Auskreuzen dieser Kabelmäntel (Crossbonding) durchgesetzt. (Siehe US-A-4 464 583 sowie CIGRE INTERNATIONAL CONFERENCE ON LARGE HIGH VOLTAGE ELECTRIC SYSTEMS 28. August 1988, PARIS FR, Seiten 1-5 - P.P LEUFKENS ET AL. "Cross bonding and a special interruption joint for HV XLPE cable in relation with the use of metal oxide surge arresters").

Zu diesem Zweck wird die Strecke in drei - bzw. ein Vielfaches von drei - gleichlangen Abschnitten unterteilt. Durch ein zyklisches Vertauschen (Auskreuzen) der Kabelmäntel untereinander ergänzen sich die induzierten Mantelspannungen im Idealfall zu Null. (Siehe Revue générale de l'électricité Bd. 85, No. 4, April 1976, PARIS FR Seiten 323 - 330. D. PAULIN ET AL. "Aspects particuliers d'une liaison en câbles haute tension").

Bislang ist es üblich, das Auskreuzen der Kabelmäntel in den Verbindungsmuffen vorzunehmen. Zu diesem Zweck werden die leitenden Kabelmäntel in den Muffen getrennt nach außen geführt. Dieses Vorgehen hat allerdings Konsequenzen für die Projektierung und Trassierung der Kabelanlage. Die einzelnen Kabelabschnitte sind in ihrer Länge so zu bemessen, daß an den Auskreuzpunkten jeweils eine Verbindungsmuffe vorhanden ist. Damit sind die einzelnen Kabellängen als Paßlängen herzustellen.

Der Erfindung liegt die Aufgabe zugrunde, ein Verfahren zum zyklischen Auskreuzen von Kabelmänteln kunststoffisolierter Hochspannungskabel anzugeben, bei dem die Trennung der leitenden Kabelmäntel im Kabel selbst durchgeführt wird.

Bei dem erfindungsgemäßen Kabel ist die Trennstelle so ausgebildet, daß einerseits die elektrische Funktion des Kabels an dieser Stelle nicht beeinflußt wird und andererseits die äußeren Aufbauelemente der Trennstelle dieselben Eigenschaften aufweisen wie die äußeren Aufbauelemente des Kabels. Diese Aufgabe wird durch die kennzeichnenden Merkmale des Anspruchs 1 gelöst.

Die Erfindung wird im folgenden anhand eines Ausführungsbeispiels erläutert.

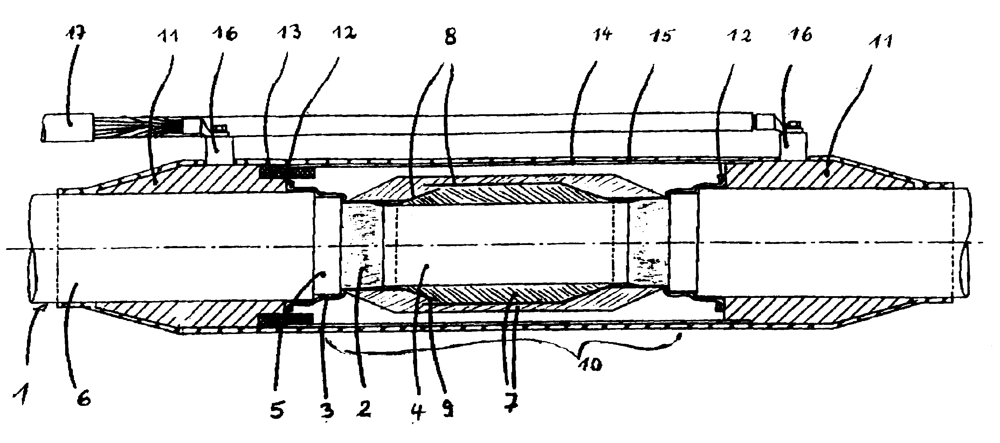

Die Figur 1 zeigt ein kunststoffisoliertes Hochspannungskabel, an dem nach dem erfindungsgemäßen Verfahren eine Trennung der leitenden Kabelmäntel vorgenommen worden ist. Das dargestellte Hochspannungskabel 1 besitzt über der äußeren Leitschicht 2 einen stromtragfähigen Schirm 3 aus einzelnen Cu-Drähten. Zum Schutz der Kunststoffisolierung 4 gegen eindringliche Feuchtigkeit ist über dem Schirm eine das Kabel hermetisch umschließende Al-Folie 5 als Diffusionssperre angebracht. Als Schutz gegen mechanische Beschädigung ist das Kabel außen mit einem Kunststoffmantel 6 beispielsweise aus PE oder PVC umhüllt.

Zur Trennung der leitenden Kabelmäntel, beispielsweise die Al-Folie, die Cu-Schirmdrähte und die äußere Leitschicht, sind im Bereich der einzubringenden Trennstelle 10 der Kunststoffmantel 6 und die Al-Folie 5 entfernt und die Cu-Schirmdrähte 3 durchtrennt.

Die äußere Leitschicht 2 des Hochspannungskabels ist in einem bestimmten Bereich von der Isolierung 4 entfernt. In dem freiliegenden Bereich wird die Isolierung 4 durch eine Bewicklung aus Isolierbändern 7, beispielsweise aus selbstverschweißenden EPR-Bändern, aufgedickt. Auf dieser Bewicklung wird die äußere Leitschicht des Kabels durch leitende Bänder 8 derart wiederhergestellt, daß die beiden Enden sich überlappen, jedoch im Überlappungsbereich durch eine Bewicklung aus Isolierbändern 7 voneinander getrennt sind.

Diese Trennstrecke 10 ist einerseits nach der im Fehlerfall möglichen transierten Spannungsbeanspruchung und nach der bei der Prüfung des Kunststoffmantels vorgeschriebenen Gleichspannung, sowie andererseits im Zusammenwirken mit der Aufdickung der Kabelisolierung so ausgelegt, daß die elektrischen Eigenschaften des Hochspannungskabels nicht verändert sind.

Zum Herausführen der stromtragfähigen Kabelmäntel sind an beiden Seiten der Trennstelle längsgeteilte metallische Erdungsflansche 11 auf das Kabel aufgebracht. Die Cu-Schirmdrähte des Kabels sind an den Erdungsflansch 11 entweder angelötet oder mit Kabelschuhen 12 angeschraubt.

Im gezeigten Anführungsbeispiel sind die Erdungsflansche 11 mit einem Kleber wasserdicht mit dem Kunststoffmantel 6 des Kabels verbunden. Auf der einen Seite ist auf dem Erdungsflansch ein längsgeteilter Isolierring 13 angebracht, der die gleiche Spannungsfestigkeit wie die Überlappungsstelle 9 der äußeren Leitschicht hat. Der Isolierring 13 ist ebenfalls mit dem Erdungsflansch 11 wasserdicht verklebt. Über die Trennstelle ist eine Al-Folie 14 als Diffusionssperre gegen eindringende Feuchtigkeit und ein längsgeteilter Schrumpfschlauch 15 als mechanischer Schutz aufgebracht. Wie in Figur 1 dargestellt, erfolgt das Auskreuzen der Kabelmäntel an den Erdungsanschlüssen 16 der Erdungsflansche 11 mittels eines speziellen Erdungskabels 17.

Die gesamte Trennstelle kann zusätzlich durch ein Gehäuse, beispielsweise aus glasfaserverstärktem Kunststoff, geschützt werden, das mit einer Vergußmasse gefüllt ist.

Bei Kabelkonstruktionen mit einem metallischen Außenmantel aus Aluminium oder Blei werden die Erdungsflansche auf den Metallmantel aufgelötet oder aufgeschweißt.

## Patentansprüche

1. Verfahren zum zyklischen Auskreuzen von Kabelmänteln kunststoffisolierter Hochspannungskabel bei dem die leitenden Kabelmäntel abschnittweise getrennt und zwischen den drei Phasen des Drehstromsystems zyklisch vertauscht werden, **dadurch gekennzeichnet**, daß die Trennung der leitenden Kabelmäntel im Kabel selbst durchgeführt wird und daß zu diesem Zweck im Bereich der einzubringenden Trennstelle (10)
- die äußeren Aufbauelemente des Kabels entfernt werden,
- der stromtragfähige Kabelmantel (3), welcher aus einem geschlossenen Metallmantel und/oder einem Schirm aus Einzeldrähten besteht, getrennt wird,
- die äußere Leitschicht (2) von der Kabelisolierung (4) entfernt wird und
- die äußere Leitschicht aus leitenden Bändern (8) überlappend, aber im Überlappungsbereich durch eine Isolierstrecke (9) getrennt, wiederhergestellt wird.

2. Verfahren nach Anspruch 1, dadurch gekennzeichnet, daß die Kabelisolierung (4) im Bereich der Trennstelle durch eine Bewicklung aus Isolierbändern (7), die durch Überdehnung selbstverschweißend, aufgedickt wird.

3. Verfahren nach Anspruch 1 oder 2, dadurch gekennzeichnet, daß die äußere Leitschicht des Kabels auf dem Isolierwickel (7) durch leitende Bänder, die durch Überdehnung selbstverschweißen, derart wiederhergestellt wird, daß im Überlappungsbereich die Leitschichten durch eine Bewicklung aus Isolierbändern voneinander getrennt sind.

4. Verfahren nach einem der Ansprüche 1 bis 3, dadurch gekennzeichnet, daß der stromtragfähige Kabelmantel so wiederhergestellt wird, daß er im Überlappungsbereich der Leitschichten eine Isolierstrecke (9) besitzt.

5. Verfahren nach einem der Ansprüche 1 bis 4, dadurch gekennzeichnet, daß der äußere Kabelmantel im Bereich der Trennstelle (10) durch eine Umhüllung aus einem Schrumpfschlauch (15) ersetzt wird.

6. Verfahren nach einem der Ansprüche 1 bis 5, dadurch gekennzeichnet, daß die äußeren Aufbauelemente im Bereich der Trennstelle (10) die Eigenschaften der äußeren Aufbauelemente des Kabels besitzen und als Diffusionssperre gegen eindringendes Wasser ausgebildet werden.

7. Verfahren nach einem der Ansprüche 1 bis 6, dadurch gekennzeichnet, daß der stromtragfähige Kabelmantel (3) an beiden Seiten der Trennstelle aus der Umhüllung herausgeführt ist, und daß die Kabelmäntel zyklisch ausgekreuzt werden.

## Claims

1. Process for the cyclical crossbonding of cable sheaths of plastic-insulated high-voltage cables, in which the conducting cable sheaths are sectionally separated and cyclically changed over between the three phases of the three-phase system, characterized in that the separation of the conducting cable sheaths is carried out in the cable itself and in that for this purpose, in the region of the separating point (10) to be made
- the outer structural elements of the cable are removed,
- the cable sheath (3), capable of carrying current and comprising a closed metal sheath and/or a screen of individual wires, is separated
- the outer conductive layer (2) is removed from the cable insulation (4) and
- the outer conductive layer of conducting strips (8) is restored in an overlapping manner, but separated in the region of overlap by an insulating distance (9).

2. Process according to Claim 1, characterized in that the cable insulation (4) is thickened in the region of the separating point by a serving of insulating strips (7), which self-bond by overstretching.

3. Process according to Claim 1 or 2, characterized in that the outer conductive layer of the cable is restored on the insulating serving (7) by conducting strips, which self-bond by overstretching, in such a way that in the region of overlap the conductive layers are separated from one another by a serving of insulating strips.

4. Process according to one of Claims 1 to 3, characterized in that the cable sheath capable of carrying current is restored such that it has an insulating distance (9) in the region of overlap of the conductive layers.

5. Process according to one of Claims 1 to 4, characterized in that the outer cable sheath is replaced in the region of the separating point (10) by a covering of a shrink tube (15).

6. Process according to one of Claims 1 to 5, characterized in that the outer structural elements have in the region of the separating point (10) the properties of the outer structural elements of the cable and are designed as a diffusion barrier against penetrating water.

7. Process according to one of Claims 1 to 6, characterized in that the cable sheath (3) capable of carrying current is led out from the covering on both sides of the separating point, and in that the cable sheaths are cyclically crossbonded.

## Revendications

1. Procédé de raccordement à la terre par transposition cyclique des gaines de câble haute tension isolé au plastique, dans lequel, on sépare en portions la gaine conductrice du câble et on la transpose cycliquement entre les trois phases du réseau triphasé, caractérisé par le fait que la séparation des gaines conductrices du câble s'effectue dans le câble lui-même et que dans ce but, au voisinage de l'endroit de séparation (10) à établir,
- on enlève les éléments de superstructure extérieure du câble,
- on sépare la gaine conductrice du câble (3) qui est constituée d'une gaine métallique fermée et/ou d'un blindage de différents fils métalliques,
- on sépare la couche conductrice extérieure (2) d'avec l'isolation (4) du câble et
- on rétablit la couche conductrice extérieure constituée de rubans conducteurs (8), à recouvrement partiel mais, dans la zone du recouvrement partiel, séparés par un intervalle isolant (9).

2. Procédé selon la revendication 1, caractérisé par le fait que, au voisinage de l'endroit de séparation, on renforce l'isolation (4) du câble au moyen d'un enrubannage de rubans isolants (7) qui sont auto-soudants par étirage.

3. Procédé selon la revendication 1 ou 2, caractérisé par le fait que l'on rétablit la couche conductrice extérieure du câble sur le bobinage isolant (7) au moyen de rubans conducteurs qui sont auto-soudants par étirage, de façon telle que dans la zone de recouvrement partiel, les couches conductrices soient séparées l'une de l'autre par un enrubannage constitué de rubans isolants.

4. Procédé selon l'une des revendications 1 à 3, caractérisé par le fait que l'on rétablit la gaine conductrice du câble de façon que dans la zone du recouvrement partiel des couches conductrices elle présente un intervalle isolant (9).

5. Procédé selon l'une des revendications 1 à 4, caractérisé par le fait qu'au voisinage de l'endroit de séparation (10) on remplace la gaine extérieure du câble par une enveloppe constituée d'un fourreau rétractable (15).

6. Procédé selon l'une des revendications 1 à 5, caractérisé par le fait qu'au voisinage de l'endroit de séparation (10), les éléments de superstructure extérieure possèdent les caractéristiques des éléments de superstructure extérieure du câble et sont conçus en tant que barrage antidiffusion à l'égard de l'eau pénétrante.

7. Procédé selon l'une des revendications 1 à 6, caractérisé par le fait que, des deux côtés de l'endroit de séparation, on amène au dehors de l'enveloppe la gaine conductrice du câble (3) et que l'on transpose cycliquement les gaines du câble.
